# FASCICULE DE BREVET EUROPEEN

(11) **EP 0 863 331 B1**
(45) Date de publication et mention de la délivrance du brevet: **20.11.2002**
(21) Numéro de dépôt: 98810097.0
(22) Date de dépôt: 10.02.1998
(51) Int. Cl.: F16H 1/28, F16H 55/17

(54) **Réducteur planétaire à dentures obliques opposées**
Planetenuntersetzungsgetriebe mit entgegengesetzten Schrägverzahnungen
Planetary speed reducer with opposing oblique teeth

(30) Priorité: 21.02.1997 FR 9702076
(43) Date de publication de la demande: 09.09.1998
(73) Titulaire: SOMFY, F-74300 Cluses (FR)
(72) Inventeur: Grehant, Bernard Jean-Pierre Romme, 74300 Nancy sur Cluses (FR); Menetrier, Didier Maurice, 74970 Marignier (FR); Chatellard, David Ambroise, 74170 Saint-Gervais-Les-Bains (FR)
(74) Mandataire: Meylan, Robert Maurice

(56) Documents cités:
- DE-A- 3 923 430
- DE-A- 4 304 657
- FR-A- 2 349 770
- GB-A- 984 461
- US-A- 3 188 888
- US-A- 3 854 349

## Description

La présente invention concerne un réducteur planétaire à au moins un étage, comprenant les caractéristiques du préambule de la revendication 1. Un tel réducteur présente l'avantage de tourner avec un bruit réduit par rapport aux réducteurs à dentures droites.

Un réducteur de ce type est connu du brevet français 2 349 770. Par rapport au réducteur à denture oblique décrit dans la demande de brevet DE 43 04 657, ce réducteur présente l'avantage que les jeux de satellites sont indépendants l'un de l'autre, ce qui facilite leur fabrication. Toutefois, le planétaire de ce réducteur est constitué d'un pignon central unique muni de deux dentures obliques de sens opposés formant ensemble une denture en chevrons dont le taillage est coûteux. En outre, l'assemblage d'un tel réducteur est relativement compliqué. Du document DE-A-39 23 430, on connaît un réducteur planétaire à dentures en chevrons dont le planétaire, les satellites et la couronne sont constitués de deux pièces présentant des dentures obliques de sens opposés, ces pièces étant assemblées par chassage de l'une des pièces sur une portée cylindrique de l'autre pièce, des moyens hydrauliques permettant d'agrandir élastiquement le diamètre intérieur de la pièce chassée sur la portée de l'autre pièces pour permettre l'indexage des dentures des deux pièces l'une par rapport à l'autre. Une telle construction est onéreuse et ne permet en aucun cas de réaliser un réducteur de faible coût.

La présente invention a pour but de supprimer les contraintes liées à la fabrication d'un tel réducteur et de réduire ainsi son coût de fabrication, de telle sorte qu'il puisse trouver un usage étendu et en particulier dans des installations de stores et de volets roulants.

A cet effet, le réducteur planétaire selon l'invention est défini par les caractéristiques de la revendication 1.

Aucune indexation des pignons n'est nécessaire. Non seulement le taillage du planétaire est simplifié, mais aucune indexation des pignons n'est nécessaire lors de leur assemblage étant donné que les satellites des deux jeux tournent indépendamment les uns des autres.

Bien que les satellites à dentures opposées tournent indépendamment l'un de l'autre, ils peuvent très bien être montés sur des axes communs.

Le dessin annexé représente, à titre d'exemple, un mode d'exécution de l'invention.

La figure 1 représente un réducteur à un étage.

La figure 2 est un éclaté du réducteur représenté à la figure 1.

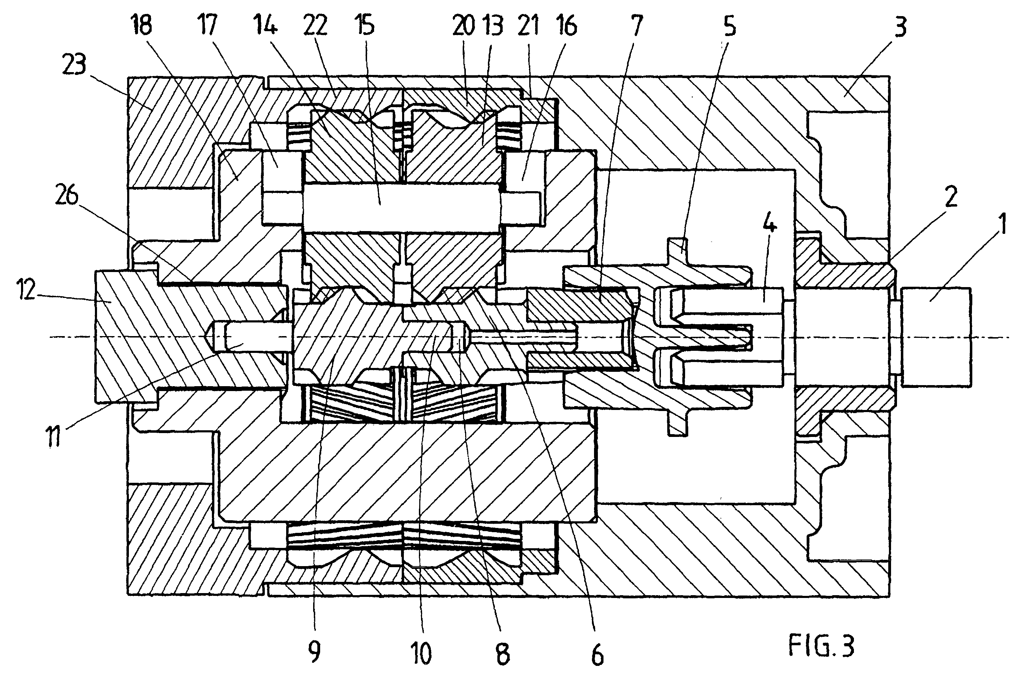

La figure 3 est une vue en coupe axiale de ce même réducteur.

Le réducteur comprend un arbre d'entrée 1 tournant dans un palier 2 porté par le fond d'un carter 3 en forme de pot cylindrique. A l'intérieur du carter 3, l'arbre 1 présente une extrémité fendue 4 venant s'emboîter dans une pièce de liaison 5 servant d'accouplement entre l'arbre d'entrée 1 et un premier pignon de planétaire 6 à denture oblique sur une extrémité duquel est chassé un pignon 7 engrenant avec la pièce de liaison 5. Le pignon 6 présente, de l'autre côté, un trou cylindrique axial 8. Un second pignon de planétaire 9, à denture oblique d'inclinaison opposé à celle de la denture du premier pignon 6, présente, d'un côté, un bout d'axe 10 par lequel le pignon 9 est fixé par chassage dans le trou 8 du premier pignon, et, de l'autre côté, un bout d'axe 11 servant de palier à un arbre de sortie 12. Dans le cas d'un réducteur à plusieur étages, l'arbre de sortie est relié à l'entrée de l'étage suivant. Les pignons 6 et 9 sont assemblés sans égard à leur position angulaire relative.

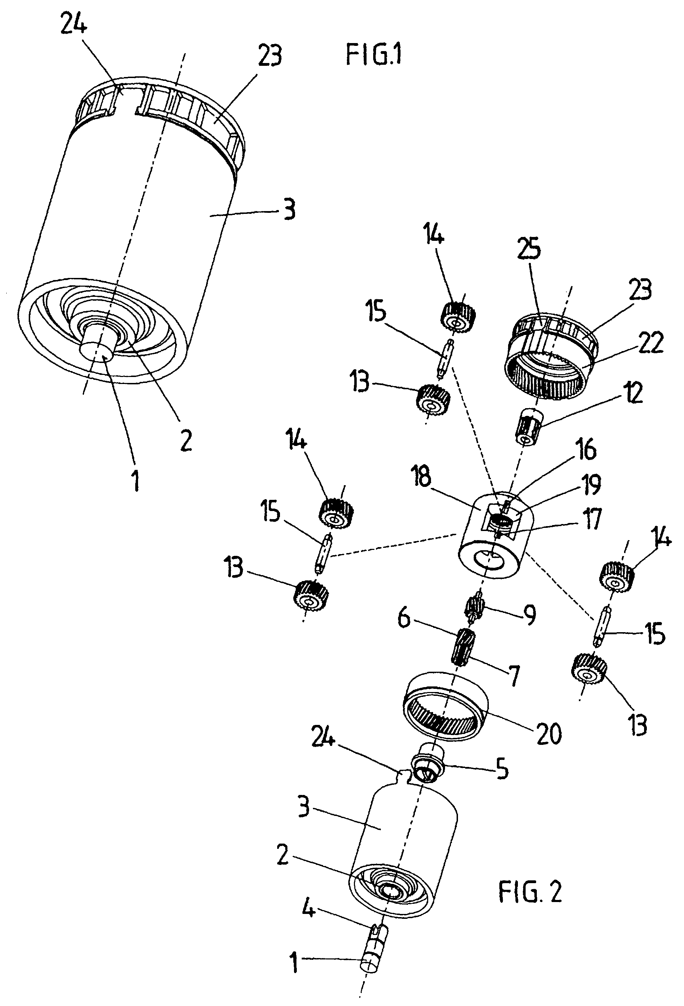

Autour du premier pignon de planétaire 6 est monté un premier jeu de satellites 13 à denture oblique correspondant à la denture oblique du premier pignon 6. Autour du second pignon de planétaire 9 est monté un second jeu de satellites 14 à denture oblique correspondant à la denture oblique du second pignon 9. Les satellites des deux jeux sont montés par paires, libre en rotation, sur des axes communs 15 dont les extrémités sont engagées dans des rainures radiales opposées 16 et 17 d'un porte-satellites 18 en forme de tambour présentant trois découpes rectangulaires 19 dans lesquelles sont logés les satellites. Les satellites 13 du premier jeu engrènent avec une couronne 20 présentant, côté entrée, une portée cylindrique 21 par laquelle la couronne est fixée par chassage dans un logement cylindrique moleté du carter 3. Les satellites 14 du second jeu de satellites engrènent avec une seconde couronne 22 présentant, côté sortie, un prolongement cylindrique 23 dont le diamètre extérieur est égal au diamètre extérieur du carter 3. Cette seconde couronne 22 est immobilisée en rotation et en translation par une patte profilée 24 du carter emboîtée dans un logement 25 du prolongement 23 (figure 2). Les couronnes 20 et 22 présentent, bien entendu, des dentures obliques de sens opposés. Le porte-satellites 18 entraîne l'arbre de sortie 12 par une denture 26.

L'assemblage du réducteur se fait de la manière suivante :

On assemble les pignons 6 et 9 et monte l'arbre de sortie 12 sur le pignon 9 puis on introduit cet ensemble dans le porte-satellites 18. Les pignons de planétaire sont ainsi maintenus positionnés correctement dans le porte-satellites, prêts à recevoir les satellites. On monte ensuite les satellites dans le porte-satellites de manière à ce qu'ils viennent engrener avec les pignons de planétaire. On introduit ensuite le sous-ensemble ainsi obtenu dans la couronne 22, puis on engrène la couronne 20 sur le sous-ensemble. On monte ensuite la pièce de liaison 5 sur le pignon 7 puis on chapeaute le tout avec le carter 3, positionne la languette 24 en face de son logement 25 et solidarise la couronne 20 au carter 3 par chassage de sa portée 21 dans le logement moleté du carter 3, puis on met en place l'arbre d'entrée 1.

## Revendications

1. Réducteur planétaire à au moins un étage, comprenant au moins un étage à dentures obliques opposées comprenant
- un planétaire (6, 9) muni de deux dentures obliques opposées,
- un porte-satellites (18) portant un premier jeu de satellites (13) engrenant avec l'une des dentures du planétaire et un second jeu de satellites (14) engrenant avec l'autre denture du planétaire,
- les satellites d'un jeu pouvant tourner indépendamment des satellites de l'autre jeu autour de leurs axes (15),
- une première couronne à denture oblique (20) engrenant avec le premier jeu de satellites et une seconde couronne à denture oblique (22) engrenant avec le second jeu de satellites,
- ces deux couronnes étant fixées ensemble par une pièce de fixation (3),
- le planétaire est constitué de deux pignons (6, 9) à dentures obliques opposées faites de manière à être solidaires en rotation,
**caractérisé en ce que**
- les deux pignons (6, 9) sont assemblés l'un avec l'autre uniquement de manière à être solidaires en rotation sans égard à leur position angulaire relative, et
- les deux couronnes sont fixées ensemble dans une position relative résultant du montage des dits pignons du planétaire.

2. Réducteur selon la revendication 1, **caractérisé en ce qu'**un pignon (6) des pignons planétaire présente un trou cylindrique axial (8) et l'autre pignon (9) du planétaire présente un bout d'axe (10) fixé par chassage dans le trou axial (8) et l'autre pignon.

3. Réducteur selon la revendication 2, caractérisé en en ce qu'il comprend un arbre d'entrée (1) présentant une extrémité intérieur fendue (4) emboîtée dans une pièce de liaison (5) servant d'accouplement entre l'arbre d'entrée et un pignon (6) des pignons de planétaire et que l'autre pignon (9) de planétaire est muni d'un bout d'axe (11) servant de palier à un arbre de sortie (12).

4. Réducteur selon l'une des revendications 1 à 3, **caractérisé en ce qu'**une couronne (20) des couronnes est fixée par chassage dans un carter (3) et que l'autre couronne (22) est immobilisée en rotation et axialement par une patte (24) emboîtée dans un logement (25) de la couronne.

5. Réducteur selon l'une des revendications 1 à 4, **caractérisé en ce que** les satellites (13, 14) des deux jeux sont montés rotativement autour d'axes communs (15).

## Patentansprüche

1. Planetenuntersetzungsgetriebe, das wenigstens einstufig ist und wenigstens eine Stufe mit entgegengesetzten Schrägverzahnungen aufweist, mit
- einem Sonnenrad (6, 9), das mit zwei entgegengesetzten Schrägverzahnungen versehen ist,
- einem Planetenradträger (18), der eine erste Gruppe von Planetenrädern (13), die mit einer der Verzahnungen des Sonnenrads in Eingriff stehen, und eine zweite Gruppe von Planetenrädern (14) trägt, die mit der anderen Verzahnung des Sonnenrads in Eingriff stehen,
- wobei sich die Planetenräder einer Gruppe unabhängig von den Planetenrädern der anderen Gruppe um ihre Achsen (15) drehen können,
- einem ersten schrägverzahnten Innenzahnkranz (20), der mit der ersten Gruppe von Planetenrädern in Eingriff steht, und einem zweiten schrägverzahnten Innenzahnkranz (22), der mit der zweiten Gruppe von Planetenrädern in Eingriff steht,
- wobei diese beiden Innenzahnkränze durch ein Befestigungsteil (3) miteinander befestigt sind,
- und das Sonnenrad aus zwei entgegengesetzte Schrägverzahnungen aufweisenden Ritzeln (6, 9) besteht, welche drehfest miteinander verbunden sind,
**dadurch gekennzeichnet,**
- **dass** die beiden Ritzel (6, 9) nur derart aneinandergefügt sind, dass sie ohne Rücksicht auf ihre relative Winkellage drehfest miteinander verbunden sind, und
- dass die beiden Innenzahnkränze miteinander in einer relativen Lage befestigt sind, welche sich aus der Montage der erwähnten Ritzel des Sonnenrads ergibt.

2. Untersetzungsgetriebe nach Anspruch 1, **dadurch gekennzeichnet, dass** ein Ritzel (6) der Ritzel des Sonnenrads eine axiale zylindrische Öffnung (8) und das andere Ritzel (9) des Sonnenrads einen Wellenzapfen (10) aufweist, welcher in der axialen Öffnung des anderen Ritzels durch Einpressen befestigt ist.

3. Untersetzungsgetriebe nach Anspruch 2, **dadurch gekennzeichnet, dass** es eine Eingangswelle (1) mit einem inneren geschlitzten Ende (4) hat, in welches ein Verbindungsteil (5) eingreift, das als Kupplung zwischen der Eingangswelle und einem Ritzel (6) der Ritzel des Sonnenrads dient, und dass das andere Ritzel (9) des Sonnenrads mit einem Wellenzapfen (11) versehen ist, der als Lager für eine Ausgangselle (12) dient

4. Untersetzungsgetriebe nach einem der Ansprüche 1 bis 3, **dadurch gekennzeichnet, dass** ein Innenzahnkranz (20) der Innenzahnkränze durch Einpressen in ein Gehäuse (3) befestigt ist und der andere Innenzahnkranz (22) gegen Drehung und axiale Verschiebung durch einen Lappen (24) unbeweglich gehalten wird, welcher in eine Öffnung (25) des Innenzahnkranzes eingreift.

5. Untersetzungsgetriebe nach einem der Ansprüche 1 bis 4, **dadurch gekennzeichnet, dass** die Planetenräder (13, 14) der beiden Gruppen drehbar auf einer gemeinsamen Achse (15) befestigt sind.

## Claims

1. Planetary gearbox with at least one stage, comprising at least one stage with helical teeth in opposite directions comprising
- a sun gear (6, 9) with two sets of helical teeth in opposite directions,
- a planet carrier (18) carrying a first set of planet gears (13) meshing with one of the sets of teeth on the sun gear and a second set of planet gears (14) meshing with the other set of teeth on the sun gear,
- the planet gears of one set to rotate being able to rotate independently of the planet gears of the other set about their axles (15),
- a first annulus gear with helical teeth (20) meshing with the first set of planet gears, and a second annulus gear with helical teeth (22) meshing with the second set of planet gears,
- these two annulus gears being joined together by a joining piece (3),
- the sun gear consisting of two pinions (6, 9) with helical teeth in opposite directions joined together only in such a way that they rotate as one, **characterized in that**,
- the two pinions (6, 9) are assembled one with another solely in such a way that they rotate as one irrespective of their relative angular position, and
- the two annulus gears are fixed together in a relative position resulting from the assembling of said sun gear pinions.

2. Gearbox according to Claim 1, **characterized in that** one pinion (6) of the sun gear pinions has an axial cylindrical hole (8) and the other pinion (9) of the sun gear has a length of shaft (10) which is driven into the axial hole (8) of the other pinion and fixed therein.

3. Gearbox according to Claim 2, **characterized in that** it comprises an input shaft (1) having a split interior end (4) fitted into a connecting piece (5) used to couple the input shaft with one pinion (6) of the sun gear pinions and **in that** the other sun gear pinion (9) has a length of shaft (11) which acts as a bearing for an output shaft (12).

4. Gearbox according to one of Claims 1 to 3, **characterized in that** one annulus gear (20) of the annulus gears is driven into a casing (3) and fixed therein and **in that** the other annulus gear (22) is immobilized in terms of rotation and axially by a lug (24) which fits into a housing (25) in the annulus gear.

5. Gearbox according to one of Claims 1 to 4, **characterized in that** the planet gears (13, 14) of the two sets are mounted so that they can rotate about common axles (15).
